Europäisches Patentamt

European Patent Office

Office européen des brevets

(19)

(11) EP 0 707 189 A2

## (12) DEMANDE DE BREVET EUROPEEN

(43) Date de publication:
**17.04.1996 Bulletin 1996/16**

(51) Int Cl.⁶: **G01B 7/02**, G01B 7/04

(21) Numéro de dépôt: **95402240.6**

(22) Date de dépôt: **06.10.1995**

(84) Etats contractants désignés:
**DE ES GB IT**

(30) Priorité: **10.10.1994 FR 9412067**

(71) Demandeur: **MAGNETI MARELLI FRANCE**
**F-92002 Nanterre (FR)**

(72) Inventeurs:
• **Boucly, Bernard**
  **F-78150 Le Chesnay (FR)**
• **Rochard, Pascal**
  **F-78540 Vernouillet (FR)**

(74) Mandataire: **Bérogin, Francis**
  **Cabinet Plasseraud**
  **84, rue d'Amsterdam**
  **F-75440 Paris Cedex 09 (FR)**

(54) **Procédé et dispositif de contrôle de la position et/ou du mouvement d'un actionneur électromagnétique**

(57)     L'actionneur (1) à résistance équivalente (r, 2) et enroulement (3) à coefficient d'auto-inductance (L) est en série entre une source (Vbat) électrique et la masse avec un interrupteur (4) et un shunt (7). On calcule le coefficient d'auto-inductance (L) de l'enroulement (3) en fonction du temps, du courant (i) le traversant et de la tension à ses bornes, de façon à obtenir une image du mouvement (d) dont le coefficient (L) est une fonction pour l'actionneur (1) considéré, et on compare L calculé à au moins une valeur d'un terme de comparaison correspondant à une autre image du mouvement (d) pour en déduire un signal de diagnostic de position et/ou de mouvement de l'actionneur (1).

Application aux actionneurs du type électrovanne, injecteur, moteur pas à pas, relais, notamment embarqués sur véhicules automobiles, et au diagnostic des faisceaux de câblage de ces véhicules.

FIG.1.

EP 0 707 189 A2

## Description

L'invention concerne un procédé et un dispositif permettant le contrôle de la position et/ou du mouvement d'un actionneur électromagnétique, tel qu'un relais, une électrovanne, un moteur pas à pas, un injecteur à électroaimant, notamment pour une installation d'alimentation en combustible par injection pour moteur à combustion interne, et plus généralement tout actionneur électromagnétique à circuit magnétique déformable par les mouvements d'au moins un équipage mobile dont l'actionneur est muni.

Le procédé et le dispositif de l'invention sont destinés à donner, de préférence en permanence, une information électrique représentative du mouvement de l'équipage mobile de l'actionneur électromagnétique par la mesure de sa course, et permettant de contrôler le mouvement mécanique de l'actionneur.

Qualitativement, cette information électrique peut être utilisée pour obtenir un diagnostic sur l'action mécanique de l'actionneur (actionneur bloqué, ou actionneur en mouvement, par exemple).

Quantitativement, cette information électrique peut également être utilisée pour donner une mesure d'amplitude et/ou de vitesse de course de l'équipage mobile de l'actionneur, et donc aussi un diagnostic de position ou déplacement, en particulier de début ou de fin de course, ainsi qu'un diagnostic d'état, par exemple indicateur d'une usure mécanique de l'actionneur, ou d'un mouvement de manoeuvre ralenti, témoignant d'une gêne apportée à son fonctionnement.

Le procédé et le dispositif de l'invention peuvent être mis en oeuvre sur des installations fixes, pour le contrôle et le diagnostic du fonctionnement d'actionneurs électromagnétiques les équipant, mais ils sont également destinés à être mis en oeuvre pour réaliser le contrôle et le diagnostic d'actionneurs embarqués sur des véhicules, en particulier automobiles, en respectant les normes se rapportant à ce type de diagnostic embarqué, par exemple pour le diagnostic électromagnétique des relais du véhicule, le diagnostic et le positionnement d'électrovannes, tel qu'une électrovanne de recirculation des gaz d'échappement, ou de pilotage du débit d'air de ralenti, admis en dérivation sur le papillon de régulation du débit d'air d'alimentation d'un moteur, ou encore de pilotage de la purge d'un canister collectant des vapeurs de combustible issues du réservoir, pour le diagnostic des injecteurs d'une installation d'alimentation par injection d'un moteur, le positionnement ou le contrôle du positionnement ou du déplacement du rotor d'un moteur pas à pas, commandant par exemple la rotation dudit papillon de commande des gaz, ou encore le contrôle des faisceaux de câblage de véhicules, pré-équipés d'actionneurs, à bord des véhicules en service, ou en usine, ou encore en garage.

Dans ces applications à bord d'un véhicule motorisé, dont le moteur est alimenté en air par un corps de papillon, dans lequel la position angulaire du papillon doit être détectée, et, éventuellement, équipé d'un circuit de recirculation des gaz d'échappement comprenant une électrovanne dont la position d'ouverture et/ou de fermeture plus ou moins complète doit être détectée, un dispositif selon l'invention remplace avantageusement et respectivement un capteur potentiométrique de recopie de la position angulaire du papillon, ou un capteur magnétique, par exemple à effet Hall, de recopie de la position de l'électrovanne de recirculation des gaz d'échappement.

En effet, il est connu qu'une façon fiable d'assurer le contrôle et/ou la mesure de la position et/ou du mouvement d'un équipage mobile d'un actionneur électromagnétique, ou entraîné par un tel actionneur, consiste à prévoir un capteur de position et/ou de mouvement, avec un dispositif de détection de fin de course de type connu, qui est physiquement présent et lié ou, au moins dans certaines positions, en contact avec l'équipage mobile pour fournir une information électrique relative à sa position et/ou son mouvement.

Le diagnostic de l'action mécanique d'un actionneur électromagnétique nécessite donc, actuellement, le rajout d'un dispositif extérieur à l'actionneur, ou intégré à ce dernier mais non nécessaire à son fonctionnement, et permettant de mesurer le mouvement ou de constater l'absence de mouvement.

Mais ces moyens connus d'effectuer le contrôle ou le diagnostic d'une action mécanique supposent toujours que l'actionneur électromagnétique considéré présente au moins une sortie d'un organe accessible lié à l'équipage mobile pour détecter la position, le déplacement et/ou le mouvement de ce dernier.

On connaît également des actionneurs électromagnétiques du type électrovanne, par exemple pour la recirculation des gaz d'échappement, dont on peut tirer une information sur la position de la vanne, et donc sur le débit de gaz qui la traverse, à partir de l'observation du courant électrique traversant une bobine de commande, et en particulier l'observation de la présence ou de l'absence d'une singularité du courant. Mais ces dispositifs de détection basés sur l'observation du courant électrique ont pour inconvénient d'être dépendants de la valeur de la tension d'une source électrique d'alimentation, par exemple la batterie du véhicule. Il en résulte que le réglage du dispositif de diagnostic et/ou de contrôle et ses capacités de discrimination, notamment de reconnaisance de la forme de la courbe du courant qui le traverse, sont très délicats à assurer.

Par l'invention, on se propose de remédier aux inconvénients précités des dispositifs connus de mesure et/ou de diagnostic du mouvement et/ou de la position d'un actionneur électromagnétique, et l'invention a pour objet de proposer un procédé et un dispositif convenant mieux que ceux connus aux divers desiderata de la pratique.

Un but de l'invention est de proposer un procédé et un dispositif ne nécessitant pas de prévoir un élément additionnel coûteux, et éventuellement encombrant, comme par exemple un capteur de position et/ou mouvement, qui doit être associé à la structure de base de l'actionneur pour le contrôle de son fonctionnement.

Un autre but de l'invention est de proposer un procédé et un dispositif permettant de donner des informations de contrôle et de diagnostic dynamique non seulement du mouvement de l'actionneur électromagnétique, mais également des informations de contrôle et de diagnostic de son circuit électrique de commande, en utilisant, pour leur mise en oeuvre, les seuls paramètres électriques de ce circuit de commande.

L'invention a encore pour but de proposer un procédé et un dispositif du type précité, dont la mise en oeuvre est totalement indépendante de la valeur de la tension d'une source électrique d'alimentation, tel que la batterie du véhicule.

A cet effet, l'invention propose un procédé de contrôle de la position et/ou du mouvement d'un actionneur électromagnétique, dont le circuit magnétique est déformable par le mouvement d'au moins un équipage mobile dont l'actionneur est muni. L'actionneur comporte un enroulement de résistance équivalente (r), y compris les résistances de câblage du circuit, et un coefficient d'auto-inductance (L), et l'enroulement est alimenté par une source de tension électrique et commandé par un interrupteur. Le procédé se caractérise en ce qu'il comprend les étapes consistant à :

- calculer le coefficient d'auto-inductance de l'enroulement en fonction du temps, du courant traversant ledit enroulement et de la tension électrique aux bornes dudit enroulement, de façon à obtenir une image du mouvement, dont le coefficient d'auto-inductance est également fonction pour l'actionneur considéré, et
- comparer le coefficient d'auto-inductance calculé à au moins une valeur d'un terme de comparaison correspondant à une autre image du mouvement pour en déduire une information de contrôle de la position et/ou du mouvement de l'actionneur.

Le procédé de l'invention est ainsi basé sur un calcul effectué à partir de paramètres électriques propres à l'actionneur, et disponibles et mesurables lorsque ce dernier fonctionne, ainsi que sur la comparaison de valeurs calculées à des valeurs de référence d'une image du mouvement pour en déduire l'information recherchée.

Comme terme de comparaison, on peut choisir un seuil d'une grandeur image du mouvement, cette grandeur image pouvant être le coefficient d'auto-inductance, et le seuil pouvant être prédéterminé et fixe, ou encore variable dans le temps, et défini par exemple par auto-apprentissage, par des mémorisations successives de valeurs sélectionnées de la grandeur image, au cours de fonctionnements considérés comme corrects de l'actionneur électro-magnétique. Le résultat de cette comparaison donne une indication permettant de déduire s'il y a eu ou non mouvement.

Mais il est également possible de choisir, comme terme de comparaison, au moins une formule théorique ou une table de conversion, donnant des valeurs correspondantes du mouvement et d'une grandeur image de ce dernier, cette grandeur image pouvant, dans ce cas également, être le coefficient d'auto-inductance lui-même.

Un autre choix possible du terme de comparaison est de considérer l'enregistrement d'une grandeur image du mouvement, par exemple et à nouveau le coefficient d'auto-inductance, l'enregistrement de cette grandeur image étant mené parallèlement au calcul du coefficient d'auto-inductance.

Dans ce dernier cas, le procédé consiste avantageusement à :

- calculer en permanence le coefficient d'auto-inductance, dont la valeur est comprise entre deux bornes finies correspondant chacune à l'une respectivement des deux extrémités du mouvement de l'équipage mobile,
- enregistrer les valeurs du coefficient d'auto-inductance en continu pendant au moins un cycle complet de travail normal de l'actionneur, et
- comparer les valeurs calculées aux valeurs enregistrées du coefficient d'auto-inductance pour en déduire une mesure du mouvement de l'équipage mobile au cours d'une commande électrique de l'actionneur et/ou une information de diagnostic sur le caractère achevé ou inachevé et/ou correct ou incorrect du mouvement dudit actionneur.

Comme tension aux bornes de l'enroulement (r, L), on peut prendre la différence entre la tension de la source (Vbat) et la tension (Vc) à la borne commune entre l'interrupteur de commande et l'enroulement, de sorte que pour un actionneur électromagnétique dont le circuit magnétique n'est pas saturé, sur toute la plage de mouvement de l'équipage mobile, le procédé consiste avantageusement à calculer le coefficient d'auto-inductance (L) par la formule:

$$L(t) = \frac{1}{i(t)} . \int [ (Vbat - Vc) - ri(t)]\, dt,$$

où i(t) est le courant traversant l'enroulement, en fonction de temps.

L'invention a également pour objet un dispositif pour la mise en oeuvre du procédé présenté ci-dessus, et qui se caractérise en ce qu'il comprend :

- un shunt, en série avec l'actionneur et l'interrupteur de commande, entre ce dernier et la masse, pour la mesure du courant (i) traversant l'enroulement de l'actionneur,
- des moyens de commande de l'interrupteur,
- des premiers moyens soustracteurs, reliés à la source de tension (Vbat) et à la borne commune de tension (Vc) entre l'interrupteur et l'actionneur, et calculant la tension (Vbat - Vc) aux bornes de l'actionneur,

- des moyens donnant une valeur de la résistance (r) corrigée en fonction de la température, notamment de la température du moteur, par exemple celle d'un liquide de refroidissement du moteur,

- des moyens multiplicateurs dont l'entrée est reliée à la borne commune entre l'interrupteur et le shunt, pour mesurer le signal i(t), et multipliant ce signal par un facteur proportionnel à la résistance équivalente (r) de l'actionneur de façon à calculer ri(t).

- des seconds moyens soustracteurs, reliés à la sortie des premiers moyens soustracteurs et à la sortie des moyens multiplicateurs, et calculant la tension ( (Vbat-Vc) - ri(t) ) aux bornes de l'enroulement,

- des moyens intégrateurs, dont l'entrée est reliée à la sortie des seconds moyens soustracteurs et intégrant le signal reçu de ces derniers,

- des moyens diviseurs, dont une première entrée est reliée à la sortie des moyens intégrateurs et dont une seconde entrée est reliée à la borne commune entre l'interrupteur et le shunt, pour calculer le rapport des signaux reçus sur la première et sur la seconde entrée, et correspondant au coefficient d'auto-inductance, et

- des moyens comparateurs, comparant le coefficient d'auto-inductance à des valeurs d'un terme de comparaison image du mouvement, et délivrant une information de diagnostic sur la position et/ou le mouvement de l'actionneur.

Dans une forme particulière de réalisation, le dispositif peut être réalisé de sorte que lesdits premiers et seconds moyens soustracteurs, moyens multiplicateurs, moyens intégrateurs et moyens diviseurs sont intégrés dans un calculateur numérique d'un microcontrôleur calculant le coefficient d'auto-inductance sous forme numérique, et commandant l'interrupteur par une sortie de commande. Le microcontrôleur comporte alors avantageusement au moins trois entrées analogiques associées à au moins un convertisseur analogique-numérique de liaison au calculateur numérique, dont une première entrée analogique est reliée à la source de tension (Vbat), dont une seconde entrée analogique est reliée à la borne commune entre l'actionneur et l'interrupteur, et dont la troisième entrée analogique est reliée à la borne commune entre l'interrupteur et le shunt.

Mais il est également possible que les premiers et seconds moyens soustracteurs, les moyens multiplicateurs, les moyens intégrateurs et les moyens diviseurs soient intégrés dans un circuit analogique.

Avantageusement dans ce cas, le circuit analogique est tel que :

- les moyens multiplicateurs sont montés en parallèle sur le shunt et multiplient un signal d'entrée des seconds moyens soustracteurs par un facteur égal au rapport de la résistance équivalente de l'actionneur à la résistance du shunt,

- les moyens diviseurs reçoivent, sur leur seconde entrée, une tension de décalage non nulle à l'ouverture de l'interrupteur, et

- des moyens amplificateurs, assurant une adaptation d'échelle, sont reliés par leur entrée à la sortie des moyens diviseurs et par leur sortie aux moyens comparateurs, comprenant l'un au moins des moyens suivants : comparateur à seuil fixe, cartographie donnant le mouvement en fonction du coefficient d'auto-inductance ou du temps, et microcontrôleur, ainsi que des moyens délivrant un signal de diagnostic de position et/ou de mouvement de l'équipage mobile de l'actionneur.

L'invention a enfin pour objet l'application du procédé et de préférence aussi du dispositif selon l'invention et tels que présentés ci-dessus au diagnostic d'un actionneur électromagnétique embarqué sur véhicule automobile, et notamment du type électrovanne, en particulier de commande d'air de ralenti, de pilotage de purge de canister, de recirculation de gaz d'échappement, injecteur de combustible, relais et moteur pas à pas, ainsi qu'au diagnostic de faisceaux de câblage de véhicule qui sont équipés d'actionneurs électromagnétiques.

D'autres caractéristiques et avantages de l'invention ressortiront de la description donnée ci-dessous, à titre non limitatif, d'exemples de réalisation décrits en référence aux dessins annexés sur lesquels :

- la figure 1 représente un schéma synoptique de réalisation du dispositif,

- la figure 2 représente, en superposition et en fonction du temps, des courbes dont l'une représente l'évolution du déplacement (d), une autre l'évolution du coefficient d'auto-inductance (L), image du déplacement (d), une troisième courbe, représentant l'évolution du courant (i) étant superposée à la courbe du déplacement,

- la figure 3 représente schématiquement un exemple de réalisation du circuit de la figure 1 sous forme analogique, et

- la figure 4 représente un exemple de réalisation du circuit de la figure 1 sous forme numérique.

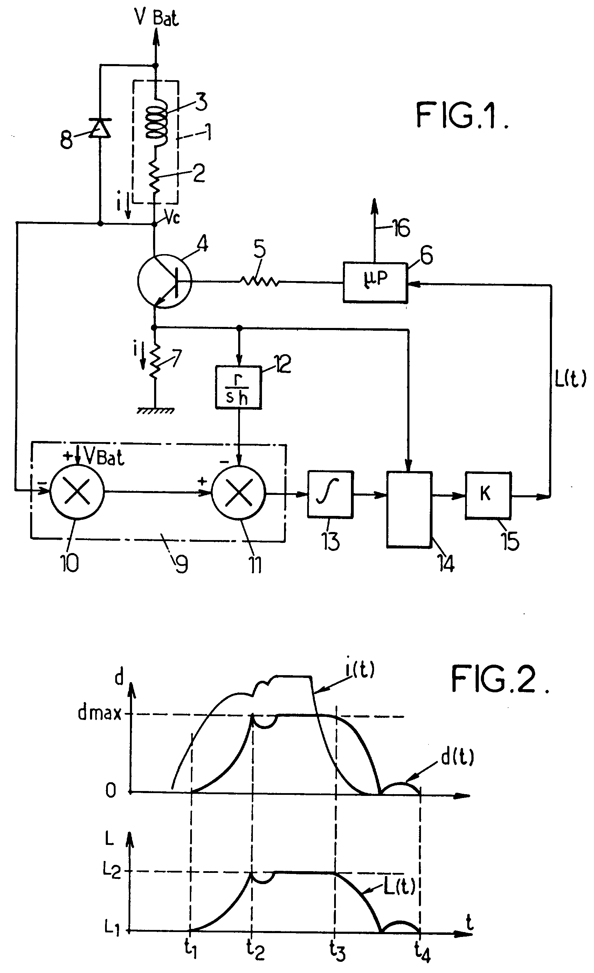

Sur la figure 1, on a représenté schématiquement en 1 un actionneur électromagnétique à équipage mobile, comprenant une résistance électrique équivalente 2, de valeur r ne dépendant que de la tempérture, dont les effets peuvent être corrigés par tous moyens connus, par exemple sensibles à la température du liquide de refroidissement d'un moteur sur lequel l'actionneur 1 est installé. L'actionneur 1 comprend un enroulement 3, dont le coefficient d'auto-inductance L est variable, et dont la résistance électrique interne s'ajoute aux résistances de câblage pour donner la résistance équivalente r. L'enroulement 3 est en général agencé en bobine entourant un noyau déplaçant un équipage mobile modifiant l'état d'un contact électrique dans un actionneur du type relais, ou un obturateur pouvant être appliqué avec étanchéité sur un siège, dans un actionneur du type électrovanne. Les déplacements de l'équipage mobile font varier l'entrefer du circuit magnétique, ainsi déformable, de l'actionneur. L'enroulement (r-L) 2, 3 de l'actionneur 1 est alimenté en courant électrique depuis une source telle que la batterie d'un véhicule automobile, à une tension Vbat de l'ordre de 13 V, et cet enroulement (r-L) 2, 3 est en série, entre la source Vbat et la masse, avec un interrupteur de commande 4, piloté au travers de la résistance 5 par un microcontrôleur 6, et un shunt 7 de valeur Sh, pour la mesure du courant i circulant dans le circuit série (r-L) 2, 3 de la source Vbat vers la masse, lorsque l'interrupteur 4 est passant.

Cet interrupteur 4 est un transistor de commutation, relié par son collecteur à l'enroulement (r-L) 2, 3, par son émetteur au shunt 7 et par sa base au microcontrôleur 6, commandant les basculements du transistor 4 bipolaire du type NPN entre ses états bloqué et saturé passant, correspondant respectivement aux positions ouverte et fermée de l'interrupteur. La borne commune à l'interrupteur 4 et à l'enroulement 2, 3 de l'actionneur 1 est également reliée, en parallèle à l'actionneur 1, à la source Vbat par une diode 8 de protection. Cette borne commune, de tension Vc, est également reliée à l'entrée négative d'un premier circuit soustracteur 10 d'un bloc soustracteur 9 à deux étages, dans lequel l'entrée positive du circuit 10 ou premier étage est également reliée à la source Vbat. La sortie du circuit 10 est reliée à l'entrée positive d'un second circuit soustracteur 11, du bloc 9, dont l'entrée négative reçoit la sortie d'un circuit multiplicateur 12 ayant son entrée reliée à la borne commune entre l'interrupteur 4 et le shunt 7. Ce circuit multiplicateur 12 multiplie la valeur i du courant, mesurée aux bornes du shunt 7, qu'il reçoit sur son entrée par un coefficient multiplicateur égal au rapport r/Sh des valeurs de la résistance équivalente 2 de l'actionneur 1 et du shunt 7. La sortie du bloc soustracteur 9, constituée par la sortie du second étage soustracteur 11, est appliquée sur l'entrée d'un circuit intégrateur 13, dont la sortie est appliquée sur la première entrée d'un circuit diviseur 14 recevant, sur sa seconde entrée, le signal de courant i de la borne commune à l'interrupteur 4 et au shunt 7. Le circuit diviseur 14 calcule le rapport du signal reçu sur sa première entrée à celui reçu sur sa seconde entrée, et sa sortie est appliquée à l'entrée d'un circuit amplificateur 15, assurant une adaptation d'échelle par multiplication par un facteur K, la sortie de ce circuit 15 étant appliquée à une entrée de mesure du microcontrôleur 6.

Le principe de fonctionnement de ce dispositif est le suivant : à la fermeture de l'interrupteur 4, la tension VL aux bornes de l'enroulement 3 de l'actionneur 1 est donnée par la formule suivante : VL = (Vbat - Vc) - ri , selon la loi d'Ohm. Mais, selon la première loi de Maxwell, cette tension VL est également exprimée par la formule suivante :

$$VL = \frac{d\,(L\,.\,i)}{dt}$$

où t est le temps.

Donc :

$$VL = i\,.\,\frac{dL}{dt} + L\,.\,\frac{di}{dt} = (Vbat - Vc) - ri.$$

d'où on tire que :

$$(L.i) = \int [\,(Vbat - Vc) - ri\,]\,dt,$$

donc

$$L\,(t) = \frac{1}{i(t)}\,.\,\int [\,(Vbat - Vc) - r\,.\,i(t)]\,dt$$

Cette formule exprime donc la valeur du coefficient d'auto-inductance L de l'enroulement 3 en fonction du temps, du courant i, de la tension Vbat de la source, de la tension Vc de la borne commune à l'actionneur 1 et à l'interrupteur 4, et de la valeur r de la résistance équivalente 2 de l'actionneur 1.

Or, dans tous les actionneurs électromagnétiques, le coefficient d'auto-inductance L de l'enroulement 3 est une fonction de l'entrefer variable du circuit magnétique de l'actionneur, cet entrefer variable correspondant au déplacement (d) de l'équipage mobile de l'actionneur. Cette fonction liant le coefficient d'auto-inductance au déplacement est de la forme générale :

$$L\,(d) = \frac{Lo}{a+b\,.\,d}$$

où Lo est le coefficient d'auto-inductance initial, constant, a et b sont des constantes, et d le déplacement variable.

Pour un relais, par exemple, cette formule générale prend la forme particulière suivante :

$$L = \frac{N^2}{\dfrac{l}{\mu S} + \dfrac{d}{\mu 0\,S}}$$

où N est le nombre de spires de la bobine du relais, $l$ est le chemin magnétique, S est la section magnétique, $\mu 0 = 4\,\pi \times 10^{-7}$ et $\mu = \mu O \times \mu r$.

Ainsi, le calcul du coefficient d'auto-inductance L, dont les valeurs restent comprises entre deux valeurs fixes L1 et L2, représentant les deux extrémités du déplacement de l'équipage mobile, donne une information sur le déplacement (d) de l'équipage mobile.

Donc, le calcul permanent de L permet d'obtenir une image du déplacement variable d, et donc de connaître la valeur du déplacement, pendant une action de commande électrique, et ainsi de discriminer si le mouvement est correct ou incorrect, et/ou achevé ou inachevé.

Ceci est illustré par la figure 2, dont le graphique supérieur représente, en fonction du temps, et en superposition, l'évolution du courant i et du déplacement variable d, et dont le graphique inférieur représente l'évolution simultanée du coefficient d'auto-inductance L, dont on voit qu'il constitue une image du déplacement variable d.

Ainsi, aux instants t < t1 et t > t4, L(t) = L1, ce qui correspond à un déplacement d nul, et donc à la position initiale de l'équipage mobile, qui n'est pas déplacé. L'actionneur est donc au repos. Entre les instants t1 et t2, L (t) croît jusqu'à atteindre sa valeur maximum L2, correspondant au déplacement maximum de l'équipage mobile qui est ainsi en déplacement de travail à l'instant t2. Entre les instants t2 et t3, et sauf pendant une brève période après t2, L(t) reste égal à L2, ce qui témoigne du maintien de l'équipage mobile en déplacement de travail de l'actionneur. Puis, après ouverture de l'interrupteur 4 et chute du courant i, L(t) décroît globalement entre les instants t3 et t4, ce qui correspond à une diminution globale du déplacement d, et donc un mouvement de l'équipage mobile de sa position de travail vers sa position de repos, qu'il atteint en t4, avec un certain retard par rapport à l'annulation du courant i, correspondant à une petite bosse de L(t) juste avant t4.

Il suffit donc d'enregistrer, dans le microprocesseur 6 de la figure 1, les seuils L1, L2 et/ou d'autres seuils intermédiaires entre ces deux valeurs, ou des seuils correspondants de toute autre image du déplacement (d), et/ou toute la courbe normale L(t) sur un cycle de travail complet, en cartographie par exemple, pour comparer ensuite les valeurs calculées de L aux valeurs enregistrées de L, image de d, ou aux valeurs enregistrées d'une autre image de d pour que le microprocesseur 6 délivre sur sa sortie de diagnostic 16 un signal sur la position, et/ou le déplacement et/ou le mouvement de l'équipage mobile, sur la qualité, la reproductibilité du déplacement, pour détecter une course nulle, partielle ou complète, ou encore une course à vitesse ralentie de l'équipage mobile, ce qui permet de détecter un blocage, une usure mécanique ou électrique de l'actionneur, ou encore la présence d'une gêne à son fonctionnement normal.

On constate que le calcul de L(t) donne un résultat insensible à la variation de la tension de source Vbat, de sorte que le résultat du calcul est facilement interprétable par un dispositif à seuils fixes dans le microprocesseur 6, pour fournir un diagnostic.

Le circuit de la figure 1 assure la mise en oeuvre de ce procédé, puisqu'il calcule Vbat - Vc à la sortie du circuit soustracteur 10, puis le signal (Vbat - Vc) - ri, soit VL à la sortie du second circuit soustracteur 11, puis l'intégration de ce signal dans le bloc intégrateur 13 et le calcul de L(t) à la sortie du bloc diviseur 14 par division du signal d'entrée par le signal de courant i(t).

Comme, à l'ouverture de l'interrupteur 4, le courant i est nul, on introduit une tension de décalage non nulle sur la seconde entrée du bloc diviseur 14, pour ne pas avoir une division impossible à faire.

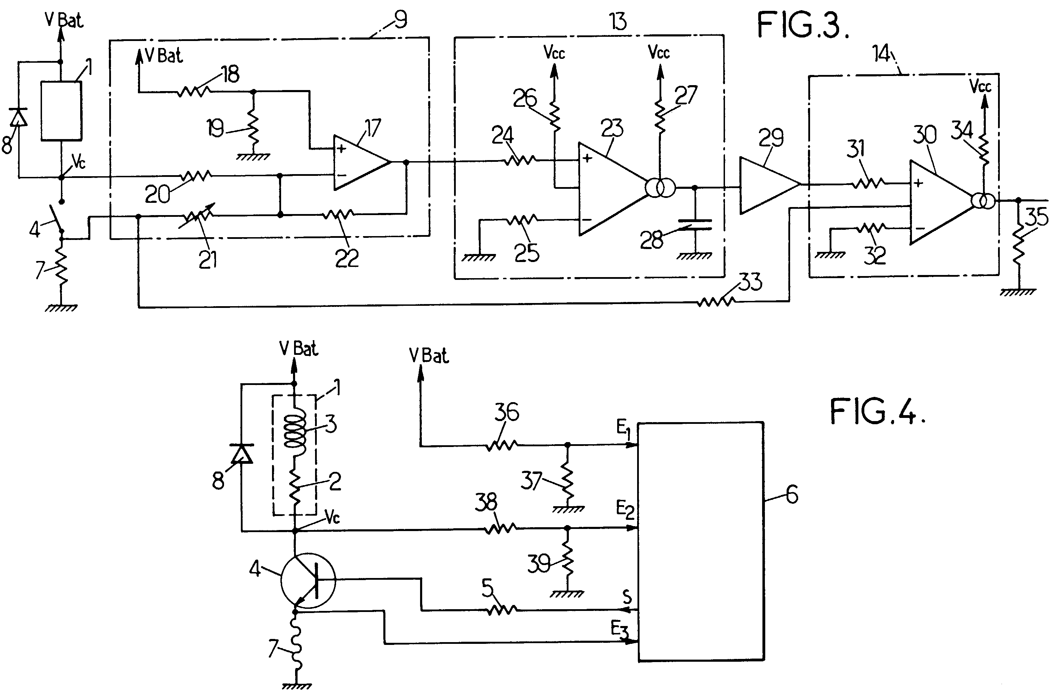

Sur la figure 3, qui représente un exemple de réalisation analogique du circuit de la figure 1, les éléments analogues à ceux de la figure 1 ont été repérés par les mêmes références. Le circuit r-L de l'actionneur 1 n'est pas détaillé, non plus que les moyens de commande de l'interrupteur 4, qui sont les mêmes que précédemment. Le bloc soustracteur 9 comprend un amplificateur opérationnel 17, dont une entrée positive est reliée à la source de tension Vbat par l'intermédiaire d'un pont de résistances d'adaptation comprenant une résistance 18 en série et une résistance 19 en parallèle et reliée à la masse, l'entrée négative de l'amplificateur 17 étant reliée, d'une part, à la borne commune, de tension Vc, entre l'interrupteur 4 et le circuit série r-L de l'actionneur 1 par l'intermédiaire de la résistance 20, et, d'autre part, à la borne commune entre l'interrupteur 4 et le shunt 7 par l'intermédiaire de la résistance de réglage variable 21. La sortie de l'amplificateur 17 est également reliée à la borne commune entre l'interrupteur 4 et le shunt 7 par la résistance 22 en série avec la résistance de réglage 21. En parallèle, la sortie de l'amplificateur 17, constituant la sortie du bloc soustracteur 9, est appliquée à l'entrée du bloc intégrateur 13. Ce bloc 13 comprend un amplificateur de transmittance 23, dont l'entrée positive est reliée à la sortie du bloc soustracteur 9 par l'intermédiaire d'une résistance en série 24. L'entrée négative de l'amplificateur 23 est reliée à la masse par l'intermédiaire d'une résistance en série analogue 25. L'entrée intermédiaire de l'amplificateur 23 est reliée à une tension de référence Vcc, par exemple de + 5 V, par une résistance 26. La sortie intermédiaire de l'amplificateur 23 est également reliée à la tension de référence Vcc par une résistance 27, tandis que sa sortie principale est reliée en parallèle à la masse par l'intermédiaire d'une capacité de filtrage 28 et à l'entrée d'un amplificateur suiveur 29, pouvant être intégré à l'amplificateur de transmittance 23, et de gain unité. La sortie de l'amplificateur suiveur 29 est appliquée sur la première entrée du bloc diviseur 14, comprenant un amplificateur de transmittance 30. L'entrée positive de ce dernier est reliée à la sortie de l'amplificateur suiveur 29 par l'intermédiaire de la résistance 31, tandis que son entrée négative est reliée à la masse par la résistance 32. Son entrée intermédiaire est directement reliée à la borne commune entre l'interrupteur 4 et le shunt 7 au travers d'une résistance 33. Cette entrée intermédiaire de l'amplificateur de transmittance 30 correspond à la seconde entrée du bloc diviseur 14. La sortie intermédiaire de l'amplificateur 30 est également reliée à la tension de référence Vcc par une résistance 34 analogue à la résistance 27, et sa sortie principale est reliée en parallèle à la masse par une résistance 35 et au microprocesseur (non représenté) analogue au microprocesseur 6 de la figure 1, et contenant les moyens comparateurs, ainsi que les moyens de commande de l'interrupteur 4.

Le dispositif de la figure 1 peut également être réalisé sous forme numérique, comme schématiquement représenté sur la figure 4, sur laquelle les éléments analogues à ceux de la figure 1 ont été repérés par les mêmes références. On retrouve l'actionneur 1 avec son circuit série r-L 2, 3, le transistor de commutation 4, commandé depuis le microcontrôleur 6 au travers de la résistance 5, et le shunt 7. Les moyens soustracteurs, multiplicateurs, intégrateurs, diviseurs et comparateurs nécessaires au calcul de L(t) et à sa comparaison à des valeurs enregistrées sont intégrés dans un calculateur numérique du microcontrôleur 6, comportant une sortie S de commande du transistor de commutation 4. Le microcontrôleur 6 comporte trois entrées analogiques E1, E2 et E3, dont chacune est reliée au calculateur numérique par un convertisseur analogique-numérique. La première entrée analogique E1 est reliée à la source de tension Vbat par l'intermédiaire d'un pont de résistances d'adaptation comportant une résistance en série 36 et une résistance en parallèle 37 reliée à la masse. La seconde entrée numérique E2 est reliée à la borne commune, de tension Vc, entre le transistor 4 et l'actionneur 1, par l'intermédiaire également d'un pont de résistances d'adaptation comportant une résistance en série 38, analogue à la résistance 36, et une résistance en parallèle 39, reliée à la masse et analogue à la résistance 37. La troisième entrée analogique E3 est reliée à la borne commune entre le transistor 4 et le shunt 7. Cette entrée E3 mesure le courant i traversant le shunt 7. La tension aux bornes de l'actionneur 1 est mesurée par la différence des tensions reçues sur les entrées E1 et E2, à un rapport de conversion près, défini par les valeurs des résistances des ponts d'adaptation. Le microcontrôleur 6 calcule algébriquement L(t) en calculant d'abord (Vbat - Vc) - ri(t), puis en intégrant ce signal, puis en divisant par i(t), de sorte que la valeur du coefficient d'auto-inductance L est calculée sous forme numérique.

En plus des applications précédemment mentionnées, le procédé et le dispositif de l'invention peuvent être appliqués au positionnement des indicateurs de tableaux de bord à organes mobiles déplacés par un actionneur électromagnétique, ainsi qu'à la détection du déplacement angulaire d'organes tels que les rotors de moteur pas à pas.

## Revendications

1. Procédé de contrôle de la position et/ou du mouvement d'un actionneur électromagnétique (1) à circuit magnétique déformable par le mouvement (d) d'au moins un équipage mobile dont l'actionneur est muni, l'actionneur (1) ayant une résistance électrique équivalente (r, 2) et comprenant au moins un enroulement (3) de coefficient d'auto-inductance (L), alimenté par une source de tension électrique (Vbat) et commandé par un interrupteur (4), caractérisé en ce qu'il comprend les étapes consistant à :

   - calculer le coefficient d'auto-inductance (L) de l'enroulement (3) en fonction du temps (t), du courant (i) traversant l'enroulement (3) et de la tension électrique aux bornes dudit enroulement (3), de façon à obtenir une image du mouvement (d), dont le coefficient d'auto-inductance (L) est également fonction pour l'actionneur (1) considéré, et
   - comparer le coefficient d'auto-inductance calculé (L) à au moins une valeur d'un terme de comparaison correspondant à une autre image dudit mouvement (d) pour en déduire une information de contrôle de la position et/ou du mouvement de l'actionneur.

2. Procédé selon la revendication 1, caractérisé en ce qu'il comprend l'étape consistant de plus à choisir comme terme de comparaison un seuil d'une grandeur image dudit mouvement (d), telle que le coefficient d'auto-inductance, ledit seuil étant prédéterminé ou variable dans le temps et défini par auto-apprentissage par mémorisations successives de valeurs sélectionnées de ladite grandeur image.

3. Procédé selon l'une des revendications 1 et 2, caractérisé en ce qu'il comprend l'étape consistant de plus à choisir comme terme de comparaison au moins une formule théorique ou table de conversion, donnant des valeurs correspondantes du mouvement (d) et d'une grandeur image de ce dernier, telle que le coefficient d'auto-inductance.

4. Procédé selon l'une des revendications 1 à 3, caractérisé en ce qu'il comprend l'étape consistant de plus à choisir comme terme de comparaison l'enregistrement d'une grandeur image dudit mouvement (d), telle que le coefficient d'auto-inductance, mené parallèlement au calcul dudit coefficient d'auto-inductance.

5. Procédé selon la revendication 4, caractérisé en ce qu'il consiste de plus à calculer en permanence le coefficient d'auto-inductance (L), dont la valeur est comprise entre deux bornes finies (L1, L2) correspondant chacune à l'une respectivement des deux extrémités du mouvement de l'équipage mobile,

   - enregistrer les valeurs du coefficient d'auto-inductance en continu pendant au moins un cycle complet de travail normal de l'actionneur (1), et
   - comparer les valeurs calculées aux valeurs enregistrées du coefficient d'auto-inductance (L) pour en déduire une mesure du mouvement (d) de l'équipage mobile au cours d'une commande électrique de l'actionneur et/ou une information de diagnostic sur le caractère achevé ou inachevé et/ou correct ou incorrect du mouvement dudit actionneur.

6. Procédé selon l'une quelconque des revendications 1 à 5, pour un actionneur électro-magnétique dont le circuit magnétique n'est pas saturé sur toute la plage de mouvement de l'équipage mobile, caractérisé en ce qu'il consiste à calculer le coefficient d'auto-inductance (L) par la formule :

$$L\,(t) = \frac{1}{i(t)} \cdot \int \left[ (Vbat - Vc) - ri(t) \right] dt,$$

où Vc est la tension à la borne commune entre l'interrupteur de commande (4) et le circuit série (2, 3).

**7.** Dispositif de contrôle de la position et/ou du mouvement d'un actionneur (1) électro-magnétique à circuit magnétique déformable par le mouvement (d) d'au moins un équipage mobile dont l'actionneur est muni, l'actionneur (1) ayant une résistance électrique équivalente (2) et comprenant au moins un enroulement (3) à coefficient d'auto-inductance (L) alimenté par une source de tension électrique (Vbat), et commandé par un interrupteur de commande (4), caractérisé en ce qu'il comprend:

- un shunt (7), en série avec l'actionneur (1) et l'interrupteur de commande (4), entre ce dernier et la masse, pour la mesure du courant (i) traversant l'enroulement (3) de l'actionneur (1),
- des moyens (6) de commande de l'interrupteur (4),
- des premiers moyens soustracteurs (10), reliés à la source de tension (Vbat) et à la borne commune, de tension (Vc), entre l'interrupteur (4) et l'actionneur (1), et calculant la tension (Vbat - Vc) aux bornes de l'actionneur (1),
- des moyens multiplicateurs (12) dont l'entrée est reliée à la borne commune entre l'interrupteur (4) et le shunt (7), pour mesurer le signal i (t), et multipliant ce signal par un facteur proportionnel à la résistance équivalente (r, 2) de l'actionneur (1) de façon à calculer ri(t).
- des seconds moyens soustracteurs (11), reliés à la sortie des premiers moyens soustracteurs (10) et à la sortie des moyens multiplicateurs (12), et calculant la tension ((Vbat - Vc) - ri(t)) aux bornes de l'enroulement (3),
- des moyens intégrateurs (13), dont l'entrée est reliée à la sortie des seconds moyens soustracteurs (11) et intégrant le signal reçu de ces derniers,
- des moyens diviseurs (14), dont une première entrée est reliée à la sortie des moyens intégrateurs (13) et dont une seconde entrée est reliée à la borne commune entre l'interrupteur (4) et le shunt (7), pour calculer le rapport des signaux reçus sur la première et sur la seconde entrée, et correspondant au coefficient d'auto-inductance (L), et
- des moyens comparateurs (6), comparant le coefficient d'auto-inductance (L) à des valeurs d'un terme de comparaison, image du mouvement (d), et délivrant une information de diagnostic sur la position et/ou le mouvement de l'actionneur.

**8.** Dispositif selon la revendication 7, caractérisé en ce que lesdits premiers et seconds moyens soustracteurs (10, 11), moyens multiplicateurs (12), moyens intégrateurs (13) et moyens diviseurs (14) sont intégrés dans un calculateur numérique d'un microcontrôleur (6) calculant le coefficient d'auto-inductance (L) sous forme numérique, et commandant l'interrupteur (4) par une sortie de commande (S), le microcontrôleur (6) comportant au moins trois entrées analogiques (E1, E2, E3) associées à au moins un convertisseur analogique-numérique de liaison au calculateur numérique, dont une première entrée analogique (E1) est reliée à la source de tension (Vbat), dont une seconde entrée analogique (E2) est reliée à la borne commune entre l'actionneur (1) et l'interrupteur (4), et dont la troisième entrée analogique (E3) est reliée à la borne commune entre l'interrupteur (4) et le shunt (7).

**9.** Dispositif selon la revendication 7, caractérisé en ce que lesdits premiers et seconds moyens soustracteurs (10, 11), moyens multiplicateurs (12), moyens intégrateurs (13) et moyens diviseurs (14) sont intégrés dans un circuit analogique dans lequel :

- les moyens multiplicateurs (12) sont montés en parallèle sur le shunt (7) et multiplient un signal d'entrée des seconds moyens soustracteurs (11) par un facteur égal au rapport de la résistance équivalente (2) de l'actionneur (1) à la résistance du shunt (7),
- les moyens diviseurs (14) reçoivent, sur leur seconde entrée, une tension de décalage non nulle à l'ouverture de l'interrupteur (4), et
- des moyens amplificateurs (15), assurant une adaptation d'échelle, sont reliés par leur entrée à la sortie des moyens diviseurs (14) et par leur sortie aux moyens comparateurs (6), comprenant l'un au moins des moyens suivants : comparateur à seuil fixe, cartographie donnant le mouvement (d) en fonction du coefficient d'auto-inductance (L) ou du temps (t), et microcontrôleur, ainsi que des moyens délivrant un signal (16) de diagnostic de position et/ou de mouvement de l'équipage mobile de l'actionneur (1).

**10.** Dispositif selon la revendication 9, caractérisé en ce que :

- les premiers et seconds moyens soustracteurs (9) et les moyens multiplicateurs (12) comprennent un amplificateur opérationnel (17) relié en entrée, d'une part, à la source de tension (Vbat), et, d'autre part, en parallèle à la borne commune (Vc) entre l'interrupteur (4) et l'actionneur (1) et à la borne commune entre l'interrupteur (4) et le shunt (7), à laquelle l'amplificateur opérationnel (17) est également relié par sa sortie,
- les moyens intégrateurs (13) comprennent un premier amplificateur de transmittance (23) relié en entrée à la sortie de l'amplificateur opérationnel (17) et par une entrée intermédiaire à une tension de référence (Vcc) positive, à laquelle il est également relié par une sortie intermédiaire, et dont la sortie principale est reliée à l'entrée d'un amplificateur suiveur (29), et

- les moyens diviseurs (14) comprennent un second amplificateur de transmittance (30) relié en entrée à la sortie de l'amplificateur suiveur (29) et par une entrée intermédiaire à la borne commune entre le shunt (7) et l'interrupteur (4), et relié par une sortie intermédiaire à la tension de référence (Vcc) et par sa sortie principale aux moyens comparateurs (6).

11. Dispositif selon l'une quelconque des revendications 7 à 10, caractérisé en ce que l'interrupteur (4) comprend un transistor relié par son collecteur à l'actionneur (1), par son émetteur à la masse et par sa base aux moyens (6) de commande à microprocesseur.

12. Application du procédé selon l'une des revendications 1 à 6 au diagnostic d'un actionneur électromagnétique (1) embarqué sur véhicule automobile, et notamment du type électrovanne, en particulier de commande d'air de ralenti, de pilotage de purge de canister, de recirculation de gaz d'échappement, injecteur de combustible, relais et moteur pas à pas, ainsi qu'au diagnostic de faisceaux de câblage de véhicule qui sont équipés d'actionneurs électromagnétiques.

# FIG.1.

V Bat

8

3

1

2

i

Vc

4

5

16

μP

6

i

7

r
s h

12

L(t)

+ VBat

−

+

∫

K

10

9

11

13

14

15

# FIG.2.

d

dmax

i(t)

0

d(t)

L

L2

L(t)

L1

t1   t2   t3   t4   t

FIG.3.

FIG.4.

EP 0 707 189 A2